(19) Europäisches Patentamt

European Patent Office

Office européen des brevets

(11) EP 1 578 006 A2

(12) EUROPEAN PATENT APPLICATION

(43) Date of publication:
21.09.2005 Bulletin 2005/38

(51) Int Cl.7: H02K 7/118, F01D 19/00

(21) Application number: 04028018.2

(22) Date of filing: 25.11.2004

| | |
|---|---|
| (84) Designated Contracting States:<br>AT BE BG CH CY CZ DE DK EE ES FI FR GB GR<br>HU IE IS IT LI LU MC NL PL PT RO SE SI SK TR<br>Designated Extension States:<br>AL HR LT LV MK YU | (71) Applicant: **NIDEC SHIBAURA CORPORATION**<br>**Fukui 917-8588 (JP)** |
| (30) Priority: 15.03.2004 JP 2004073563<br>18.05.2004 JP 2004148338<br>18.05.2004 JP 2004148354<br>06.08.2004 JP 2004231573 | (72) Inventor: **Kataoka, Toshiyuki**<br>**Obama-city Fukui 917-8588 (JP)**<br><br>(74) Representative: **Weber, Joachim**<br>**Hoefer & Partner**<br>**Patentanwälte**<br>**Gabriel-Max-Strasse 29**<br>**81545 München (DE)** |

(54) **Starting device for a synchronous motor**

(57)     In the structure of the rotary member (3) fixing a windmill, propeller, fan, impeller and so forth on the rotary axis (1) of the motor (2), having a tubular boss (8) located at the center of the rotary member (3), having a bracket (6) that is the lid of the foresaid boss (8), having the stopper (4) arranged around internal circumference of the foresaid boss, having an elastic member (5) at least, and the foresaid stopper (4) being almost bar-shaped, an axis (15) penetrating to cross bar-like stopper (4), and there is the holding hole (12) to hold the top of the foresaid rotary axis (1). In the meantime, the spiral first groove (20) to build-in the foresaid elastic member (5) around the external circumference of the holding hole is prepared, and the spiral second groove (17) to build-in the foresaid elastic member (5) around the external circumference of the holding hole is prepared, the foresaid stopper (4) is arranged nearby the foresaid elastic member (5). Since the spiral elastic member (5) moves with the rotary axis (1) rotating spirally between the spiral first groove (20) and the spiral second groove (17), the cushion effect is there because of this elastic member (5) if the stopper (4) rotates together with the stopper, and it is possible to enlarge the free angle and the sliding angle by rotating the elastic member between the first groove and the second groove.

Fig. 1

EP 1 578 006 A2

## Description

Field of the invention

This invention concerns the structure of the rotating member comprising windmill, propeller, fan and impeller etc. which are fixed on the motor such as synchronous motor.

Background of the invention

In the pump used for laundering machine etc, the synchronous motor is commonly used, which is easily structured and cost effective. However, for this synchronous motor, it is necessary to prepare idling angle at initiation because of small starting torque. Therefore the invention regarding transmission structure having free angle and sliding angle in the rotating direction has been presented. In the above-mentioned transmission structure, rotary energy is stored at free angle then the load is accelerated at the sliding angle when torque is weak at initiation. Whereas, if the sliding resistance of this region is too much, the rotary energy stored at free angle becomes insufficient, then rotary member to rotate with impeller does not come to synchronized position, so synchronous motor speeds down. In the meantime, although the structure wherein the projection of a plurality of parts are hooked so that there is idling angle in the rotary direction is presented, this structure of the rotary member needs to be fixed many parts and windmill on the synchronous motor's shaft whereby fixing operation is very complicated and it costs high because of multiple parts. Meanwhile, there is another subject that is that the windmill takes out of the bracket then gets out of the rotary axis when some dusts or foreign matter is mixed in the water whereby some force is loaded on to the windmill. This invention presents the rotating member whereby it is possible to initiate motor easily by widening the free rotating angle and sliding angle, of which structure is simple and whereby windmill does not get out of the axis when some force is loaded on to the windmill.

Disclosure of the invention

The invention according to claim 1 is the structure of the rotating member prepared rotary members such as windmill, propeller, fan, impeller etc. on its rotary axis, having tubular boss fixed center of the foresaid rotating member, having bracket that is the lid of the foresaid boss, having stopper fixed around the internal circumference of the foresaid boss, having the elastic member, and the foresaid stopper being almost bar-shape, and the foresaid rotating axis being penetrated so as to cross this bar-shape stopper, and there being opened the holding hole around the center of the foresaid boss to hold the top of the foresaid rotating axis, meanwhile the first spiral groove to build-in the foresaid elastic member being prepared around the external circumference of the holding hole, and there being opened the penetrating hole at the center of the bracket to penetrate the foresaid rotary axis, and the second spiral groove to build-in the foresaid elastic member being prepared around the external circumference of the penetrating hole, and the stopper being prepared nearby the foresaid elastic member.

The invention according to claim 2 is the structure of the rotating member prepared rotary members such as windmill, propeller, fan, impeller etc. on its rotary axis, having tubular member with the bottom part at the center of the foresaid rotating member, having holding hole so as to insert the rotary axis at the center of the foresaid bottom part, preparing the projection on the internal circumference of the tubular member, winding the metal wire spirally, fixing the foresaid rotary axis by inserting the rotary axis through the center of the coiling part of the coil spring of which both ends extend externally from the said coiling part, inserting the top of the rotary axis with coil spring into the holding hole, and one end of the both ends projecting from the coil spring so as to contact the side wall of the foresaid projection.

The invention according to claim 3 is the structure of the rotating member prepared rotary members such as windmill, propeller, fan, impeller etc. on its rotary axis, having the tubular boss at the center of the rotating member, having the bracket that is lid of the foresaid boss, having the stopper that is arranged around internal circumference of the foresaid boss, having coil spring at least, and the foresaid stopper being almost bar-shape, and the holding hole that rotates so as to hold the top of the foresaid rotary axis freely and rotary being opened at the center of the foresaid boss, and the projection to which the foresaid stopper contacts being prepared around the internal circumference of the foresaid boss, and the foresaid rotary axis being penetrated into the coil part of the foresaid spring, meanwhile the one end of the foresaid coil spring being built-in the external circumference of the holding hole, and the coil spring being fixed so that its original force is loaded on to the stopper, and the original force of the foresaid coil spring being set weakly less than starting torque of the foresaid motor.

The invention according to claim 4 is the structure of the rotating member prepared rotary members such as windmill, propeller, fan, impeller etc. on its rotary axis, having the tubular boss located on the foresaid rotary member, having the bracket that is lid of the foresaid boss, having the stopper arranged at internal circumference of the foresaid boss, having the dislocating member, and the foresaid stopper being almost bar-shape, and stopper being penetrated to be set so as to cross the foresaid rotary axis, and there being opened the holding hole to hold the rotary axis so that the top of the foresaid rotary axis rotates freely and rotary, meanwhile the female screw part being prepared at the internal circumference of the foresaid boss, and the foresaid dislocating member being meshed with the foresaid female screw, and the foresaid dislocating member dislocating along with the foresaid female screw by rotating the foresaid stopper to contact the foresaid dislocating member, and the foresaid stopper rotating with the foresaid boss when the foresaid dislocating member moves to the one end or the other end of the foresaid female screw part.

The invention according to claim 5 is the structure of the rotating member prepared rotary members such as windmill, propeller, fan, impeller etc. on its rotary axis, having the tubular boss at the center of the foresaid rotary member, having the bracket that is lid of the foresaid boss, having the stopper arranged around the internal circumference of the foresaid boss, having the dislocating member at least, and the foresaid stopper being cylinder-shape, and the foresaid rotary axis being penetrated to be fixed at center of the stopper, and there being prepared the male screw around the external circumference, and the holding hole being opened so that the top of the foresaid rotary axis rotates freely at the center of the foresaid boss, meanwhile projection extruding in the direction of the rotary axis on the internal circumference of the foresaid boss, and there being opened the penetrating hole to fix the foresaid rotary axis at the center of the foresaid bracket, and the foresaid dislocating member meshing the male screw of the stopper, and the foresaid dislocating member moving in the direction of the projection synchronizing with the rotation of the foresaid stopper, and the foresaid stopper rotating with the foresaid boss when the foresaid dislocating member reaching from the one end to the other end of the foresaid male screw.

The invention according to claim 6 is the structure of the rotating member stated in claim 1 to claim 5 characterized that the foresaid motor is the synchronous motor.

The invention according to claim 7 is the structure of the rotating member stated in claim 1 characterized that the foresaid elastic member is rubber-made.

The invention according to claim 8 is the structure of the rotating member stated in claim 4 to claim 5 characterized that plane shape of the dislocating member is arc-shape.

The invention according to claim 9 is the structure of the rotating member stated in claim 1 characterized that the plane shape of the dislocating member is ring-shape and the projection to which the foresaid stopper contacts extrudes the internal surface.

The invention according to claim 10 is the structure of the rotating member stated in claim 4 characterized that the number of the groove made around the internal circumference of the boss is more than one around the foresaid female screw.

The invention according to claim 11 is the structure of the rotating member stated in claim 5 characterized that the number of the groove made around the external circumference of the stopper is more than one around the foresaid male screw.

The invention according to claim 12 is the structure of the rotating member prepared rotary members such as windmill, propeller, fan, impeller etc. on its rotary axis, having tubular boss with plurality of fans extruding externally which is located at the center of the foresaid rotary member, having the bracket that is lid of the foresaid rotary member, having the bar-shape stopper located inside the internal circumference of the foresaid boss at least, and there being prepared the penetrating hole penetrating at the center of the foresaid boss so that the foresaid rotary axis rotates freely, and the rotary axis penetrating the foresaid penetrating hole being fixed so that it crosses to penetrate the foresaid stopper, and the projection so as to contact the foresaid stopper extruding the internal circumference of the boss, and there being opened the holding hole at the center of the foresaid bracket so that the top of the foresaid rotary axis is held rotary and freely, and the foresaid bracket being fixed on the tubular boss in the situation of that the top of the foresaid rotary axis is held in the foresaid holding hole, and the position to cap on the foresaid bracket being counter side of the foresaid motor.

The invention according to claim 13 is the structure of the rotating member stated in claim 1 to claim 12 characterized that they are driving force of the draining pump, laundry machine, dish washer and blower and so forth.

According to the invention of claim 1, as the spiral-shaped elastic member slides rotary to move in the direction of rotary axis between the first spiral groove and the second spiral groove, cushiony effect is expected with this elastic member when the stopper rotated with the rotary axis, and it is possible to enlarge the idling angle and the sliding angle by rotating the elastic member between the first groove and the second groove.

According to the invention of claim 2, the rotary axis rotates by contacting the one end of the coil spring to the side of the projection whereby rotary axis is tightened with the coil spring; meanwhile, coil spring is tightened by contacting the one end of the coil spring so the rotary axis does not idle. In the meantime, we have only to take the rotary axis out of the coil spring without disassembling the rotary member when we take out the rotary member.

According to the invention of claim 3, the boss does not rotate with the rotary axis at the initiation of the motor because it rotates freely to the holding hole but the stopper rotates with the rotary axis. Then the starting torque of the original force of the coil spring is set weakly so the stopper rotates on the contrary to the original force of the coil spring that is the direction of free angle without projection. It does not rotate to the direction of projection because there is little force to push the projection. Afterwards the motor rotates one cycle, and then when the stopper contacted the projection again, the projection is pushed to rotate with windmill because the torque of motor is strengthened for the free angle. The stopper comes back the original position again with original force of the coil spring at termination of motor rotation.

According to the invention of claim 4, the dislocating member meshes the female screw prepared on the internal circumference of the boss then the stopper rotates with the rotary axis to contact the dislocating member. The dislocating angle is the free angle from the initial rotation of the stopper to the contact with the dislocating member. Then the stopper slides with the dislocating member along with the female screw so that the dislocating member slides to the one side or the other side of the female screw. This moving angle is sliding angle. Afterwards the boss can rotates with the stopper when the dislocating member goes from the one end to the other end. It is easy to have the free angle and the sliding angle with such a structure so the motor is easy to be initiated.

According to the invention of claim 5, the dislocating member meshes the male screw of the stopper to slide the dislocating member along with the projection to the direction of axis synchronizing the rotation of the stopper. The rotating angle of the stopper while it goes to the direction of the rotary axis is free angle and sliding angle. And then the boss can rotate with the stopper when the dislocating member goes to the one side or the other side of the male screw.

According to the invention of claim 6, it is possible to reinforce the weakness of the initiating force of the synchronous motor.

According to the invention of claim 7, the shock loaded when the foresaid elastic member contacts the stopper is mitigated so we do not have to be afraid of the damage on the elastic member such as crack; meanwhile, the stopper still crutches the rotary axis steadily.

According to the invention of claim 8, since it becomes possible to have the free angle and sliding angle largely, initiation of the motor is easily done.

According to the invention of claim 9, since it becomes possible to have the free angle largely, initiation of the motor is easily done.

According to the invention of claim 10, it becomes possible to have the sliding angle largely; initiation of the motor is easily done.

According to the invention of claim 11, it becomes possible to have the sliding angle largely; initiation of the motor is easily done.

According to the invention of claim 12, the bracket is fixed being capped on the opposite side of the motor to be fixed on the boss. And then the stopper is fixed on the rotary axis then the stopper prevents the boss derailing from the rotary axis. Therefore the boss with fans does not derail out of the rotary axis even when the foreign matter hits and loads to the fans extruding the boss.

According to the invention of claim 13, they are used for driving force of draining pump, laundering machine, and pump for dish washer and so forth.

Brief description of the drawing

Fig.1 is a partial section of the structure of the rotary member in the first embodiment
Fig.2 is a partial section of the impeller in the first embodiment
Fig.3 is a plane view looking the situation without boss looking from the upper side
Fig.4 is a squint view of the elastic member of the first embodiment
Fig.5 is a section of the bracket, the elastic member and the boss of the first embodiment Fig.6 is a squint view of the structure of the rotating member in the first embodiment
Fig.7 is a bottom view of the rotating member and rotary axis in the second embodiment
Fig.8 is a vertical section of the rotating member and the rotary axis of the second embodiment
Fig.9 is a vertical section of the structure of the rotating member of the 3rd embodiment
Fig. 10 is a bottom view of the rotating member of the 3rd embodiment
Fig.11 is a vertical section of the rotating member of the structure of the rotating member in the 4th embodiment
Fig. 12 is a section viewing from A-A line in the 4th embodiment
Fig. 13 is a squint view of the dislocating member in the 4th embodiment
Fig.14 is a squint view of the another example of the dislocating member in the 4th embodiment
Fig. 15 is a vertical section of the structure of the rotating member in the 5th embodiment
Fig.16 is a section viewing from B-B line in the 5th embodiment
Fig.17 is a vertical view of the structure of the rotating member of the 6th embodiment
Fig. 18 is a section viewing from A-A in the 6th embodiment

Detailed description of the invention

1. First embodiment

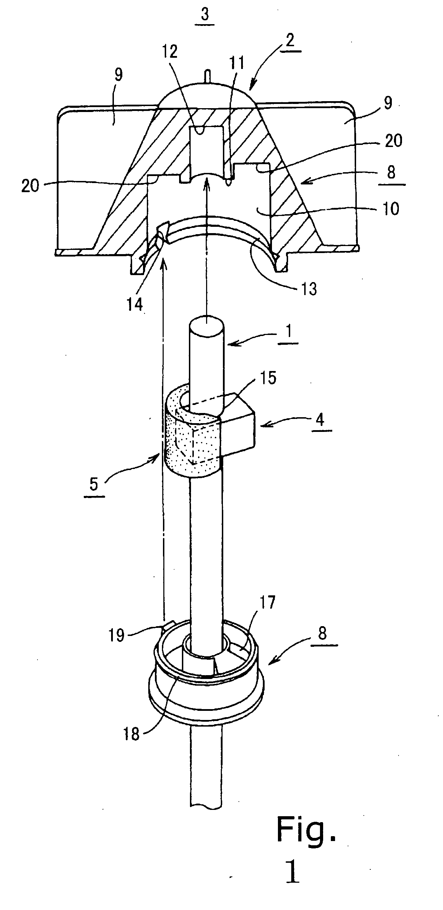

We herewith explain the structure of the rotating member of the first embodiment with fig.1 to fig.5. This embodiment is the structure in which impeller 2 of the draining pump is fixed on the rotary axis 1 of the synchronous motor. The constructing member of the rotating member 3 is the rotary axis 1, the impeller 2, the stopper 4, the elastic member 5, the bracket 6 and O-ring 7. In the impeller 2, four fans 9 is extruding the tubular boss 8 of which bottom part is opened the hole at the center. There is prepared the housing space 10 inside the boss 8 to house the elastic member 5 and the stopper 4.

As shown in fig.1, there is prepared the holding hole 12 to hold the top of the rotary axis 1 at the center of the upper side 11 of the housing space 10 of the boss 8. The first groove of which plane surface is C-shaped is prepared around the external circumference of the holding hole 12. This first groove is spirally shaped and its depth is getting gradually deep. There are prepared the chucking part 13 to fix the bracket 6 and the concave part 14 to prevent relative rotation with the bracket 6.

The stopper 4 is square-bar shaped and the penetrating hole 15 is prepared so as to cross the stopper 4 wherein the rotary axis 1 is pierced. Meanwhile this penetrating hole 15 is provided in the one end of the square-bar shaped stopper 4. The bracket 6 takes a role of the lid to cover the opening bottom side of the boss 8 and there is opened the penetrating hole 16 at the center of the boss 8 to pierce the rotary axis 1. The diameter of the penetrating hole 16 is bigger than the diameter of the rotary axis 1. There is prepared the C-shaped second groove 17 around the external part of the penetrating hole 16. This second groove is spirally shaped and its depth is getting gradually deep. There is the projection 18 at the upper side around the external wall of the bracket 6. The convex part 19 is externally extruding to the direction of diameter to hook the concave part 14 of the boss 8 in order to prevent the relative rotation.

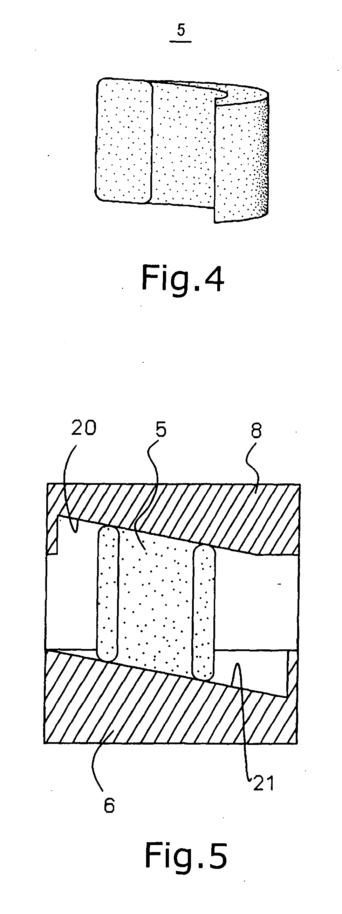

The elastic member 5 is rubber-made e.g. polyurethane of which plane surface is C-shape, and upper and bottom surface are slanted which makes spiral shape overall as shown in fig.4.

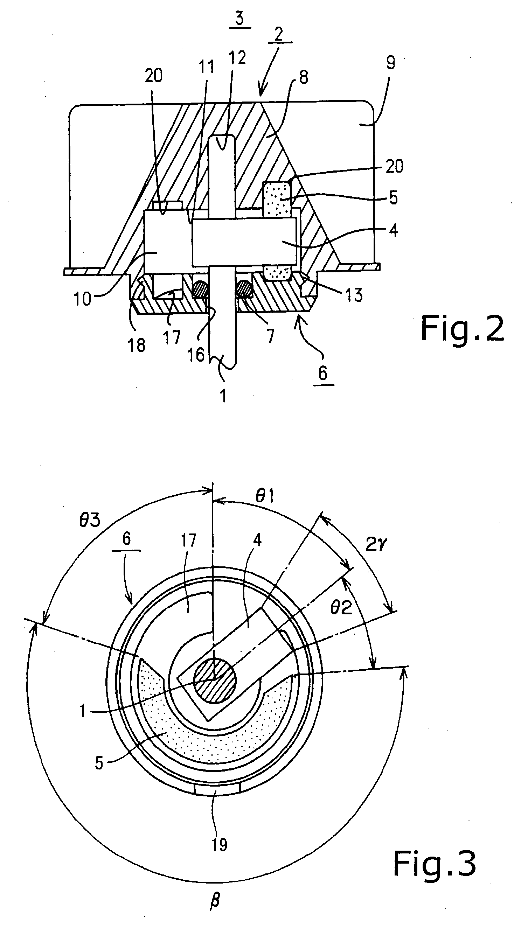

We explain herewith reaction and effect of the aforementioned structure according to the fig.3. The spiral elastic member 5 moves rotating in the direction of the rotary axis between the spiral first groove 20 and the spiral second groove 21 as shown in fig 5. Meanwhile, assembling of the grooves is done so that the deepest position of the first groove 20 corresponds to the shallowest position of the second groove 21 as well as the deepest position of the second groove 21 corresponds to the shallowest position of the first groove 20.

As shown in fig.3, $\beta=200°$ when the angle of the C-shaped elastic member 5 is $\beta$. On the other hand, the angle of the side where this elastic member 5 is not provided is around $160°=(\theta1+\theta2+\theta3)$ and the stopper 4 freely rotates in this region. In the situation mentioned above, when the rotary axis 1 rotates clockwise for example as shown in fig.3, the stopper 4 rotates for the idling angle $(\theta2-y)$ and then contacts the one end of the elastic member 5 then rotates for $\theta3$ along with the first groove 20 together with the elastic member 5.

In the meantime, when the stopper 4 rotates counter-clockwise, the stopper 4 rotates for idling angle $(\theta1+\theta3-y)$ and then the elastic member 5 rotates for sliding angle $(\theta1+\theta2)$. Afterwards the elastic member 5 rotates to the end of the second groove 17, so the elastic member's rotation stops and then stopper 4 rotates impeller 2 together with the rotary axis 1 by way of the elastic member 5.

We herewith explain the free rotating angle R1 of the rotating member 3 concretely in this embodiment. In the meantime, free rotating angle is the one summed up the free angle and the sliding angle. The free rotating angle of the rotating member 3 of this embodiment is the sum-up of the free angle and sliding angle of both rotary directions, and the free rotating angle is $(\theta2-y+\theta3)$ in the clockwise on the other hand $(\theta1+\theta3-y+\theta1+\theta2)$ in the counter-clockwise direction that results in as below;

$$R1=(\theta2\cdot y+\theta3)+(\theta1+\theta3+y+\theta1+\theta2)$$
$$=2(\theta1+\theta2+\theta3)\cdot 2y$$
$$=2(360°\cdot\beta)\cdot 2y=720°\cdot 2(\beta+y)$$

In the case of the rotating member 3 of this embodiment, since the free rotating angle can be enlarged, the stopper 4 rotates together with the rotary angle 1 and then rotates the windmill 2, so it is possible to rotate easily the synchronous motor with low initiation torque.

2. Second embodiment

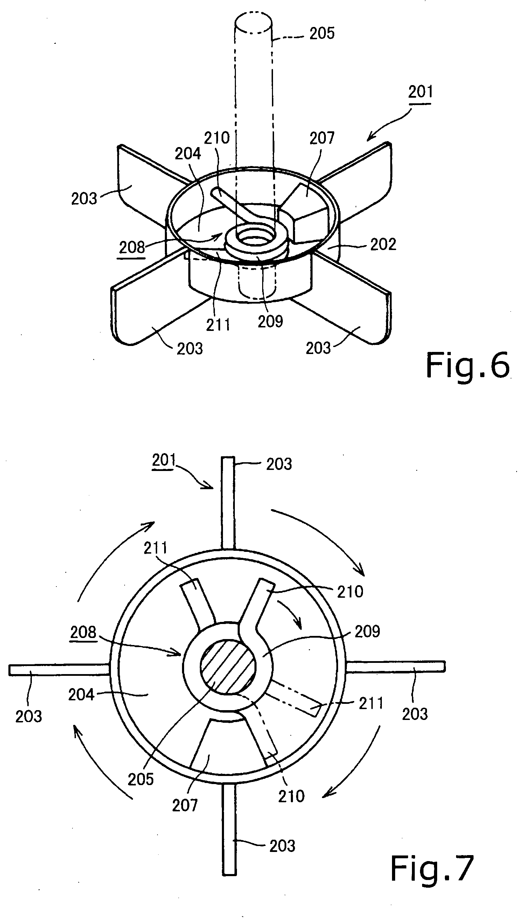

We herewith explain the structure of the rotating member of the second embodiment with fig.6 to fig. 8. This embodiment is the windmill 201 of the pump of the dish washer, and the tableware is washed with water pumped out by rotating the windmill 202. Meanwhile the driving force of the pump comes from synchronous motor, and the windmill 201 is fixed on the rotary axis 205 of synchronous motor.

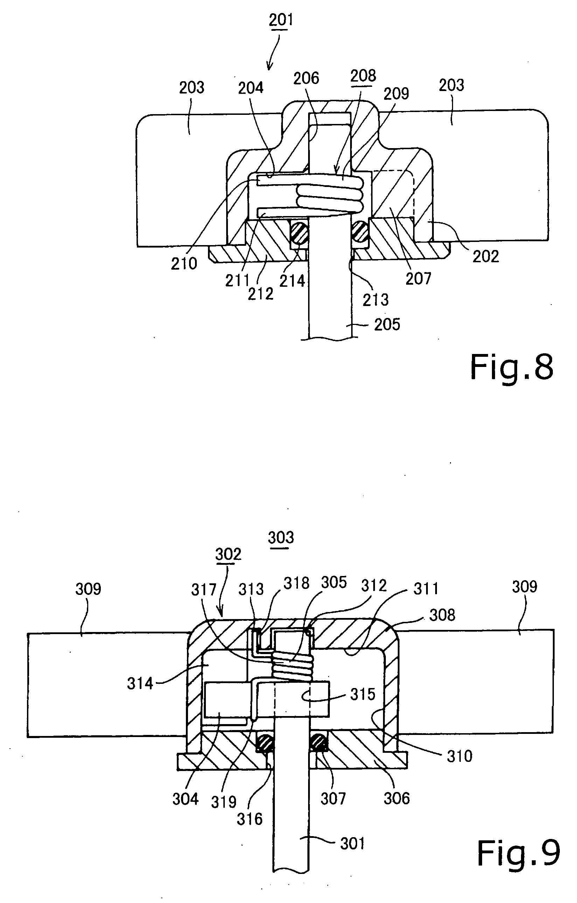

The windmill 201 of the pump is arranged the tubular member 202 and four fans 203 are extruding the outside of the tubular member 202. There is provided the bottom part 204 on the one side, in the center of which there is provided the holding hole 206 to insert the top of the rotary axis 205. The rock bottom of the bottom part is either closed or opened. In fig.8, the end of the inserting hole 206 is closed. The plane-arc shaped projection 207 extrudes to the center of the tubular member 202.

The coil spring 208 is fixed at the top of the shaft-like rotary axis 205 extruding from the rotor of the synchronous motor. The coil spring 208 forms the coiling part 209 by winding the metal wire spirally, and the both ends 210 and 211 of the metal wire extrudes outwards from the outer circumference 209. And the rotary axis 205 is inserted in the central part of the coiling part 209 of the coil spring 208. The coiling part 209 of the coil spring 208 tightens the rotary axis 205 so that the coil spring 208 is fixed on the rotary axis 205.

The top of the rotary axis 205 fixed like aforementioned way on the coil spring 208 is inserted in the penetrating hole 206 prepared at the center of the tubular member 202 as shown in fig.6.

The lid part 212 with the circular plane part has the penetrating hole 213 to penetrate the rotary axis 205, and O-ring 214 is set between the lid part 212 and the rotary axis 205.

Since the motion of the coil spring 208 in the axial direction is steadily set between the bottom part 204 of the tubular part 202 and the lid part 212, it can only rotate centering the rotary axis 205.

We herewith explain the rotating situation of the rotary axis 205 and the windmill 201 set like aforementioned way according to fig.7.

The one end 210 of the coil spring 208 and the side of the projection 207 is set to contact so that the coil spring 208 can rotate around half $\theta$ (120°= <$\theta$ = 200°).

The rotary axis 205 rotates at initiation of synchronous motor together with which the coil spring 208 rotates clockwise in fig.7. In this case, the rotary axis 205 rotates but the windmill 201 does not rotate while coil spring 208 rotates around half. And when the end part 210 of the coil spring 208 contacted the side of the projection 207, coil spring 208 tightens by the contact, and the rotary axis 205 rotates with the windmill 205 because the end part 210 is contacting the projection 207.

As explained above, since the rotary axis 205 only rotates freely around half at initiation of synchronous motor, it is easy to initiate even if the initiation torque is little. When the torque is strengthened with the half rotation, the end part 210 of coil spring 208 contacts the projection 207 to rotate the windmill 201, so the synchronous motor is easily initiated.

Because of the elasticity of the coil spring 208, unevenness of the high pulse of the synchronous motor is mitigated so the windmill 201 rotates quietly.

When the rotary torque works on the rotary axis 205, coil spring 208 works to the tightening direction so the force of stopping rotation is strengthened so that it does not rotate freely in the standard operation. In the meantime, when shocking or too much force is loaded, the rotary axis 205 freely rotates not to damage the synchronous motor, the rotary axis 205 and the windmill 201.

Regarding the rotary axis 205, since it is not necessary to process with knurling tool, key groove, D-cutting and so on, assembly is easy to get cost down, and it is available for thin rotary axis.

When we change the diameter or winding number structuring metal wire of the coil spring 208, rotary-resistant force and pulling-resistant force can be adjusted.

It is not necessary to disassemble the windmill 201 at disassembling process that means we have only to take the coil spring 208 out of the rotary axis 205. Besides, re-assembling is possible and the surface of the rotary axis 205 is not cut or marred owing to the coil spring 208.

It is available for the compact motor with the rotary axis having thin diameter as there is no need to process the rotary axis 205.

In the meantime, we explained about the case that the rotary axis 205 rotates to the clockwise direction in the fig.7; on the contrary the similar effect is available when it rotates counter-clockwise because the end part 211 contacts the projection 207.

3. Third embodiment

We herewith explain the structure of the rotating member of the second embodiment with fig.9 to fig. 10. This embodiment is the structure in which impeller 302 of the draining pump is fixed on the rotary axis 301 of the synchronous motor. The rotary member 303 consists of the rotary axis 301, impeller 302, the stopper 304, spring 305, bracket 306 and O-ring 307. Regarding the impeller 302, four fans 309 are projecting out of tubular boss 308, in the center of which the bottom part has the opening. Meanwhile there are prepared the housing space 310 inside the boss 308 to house the spring 305 and the stopper 304.

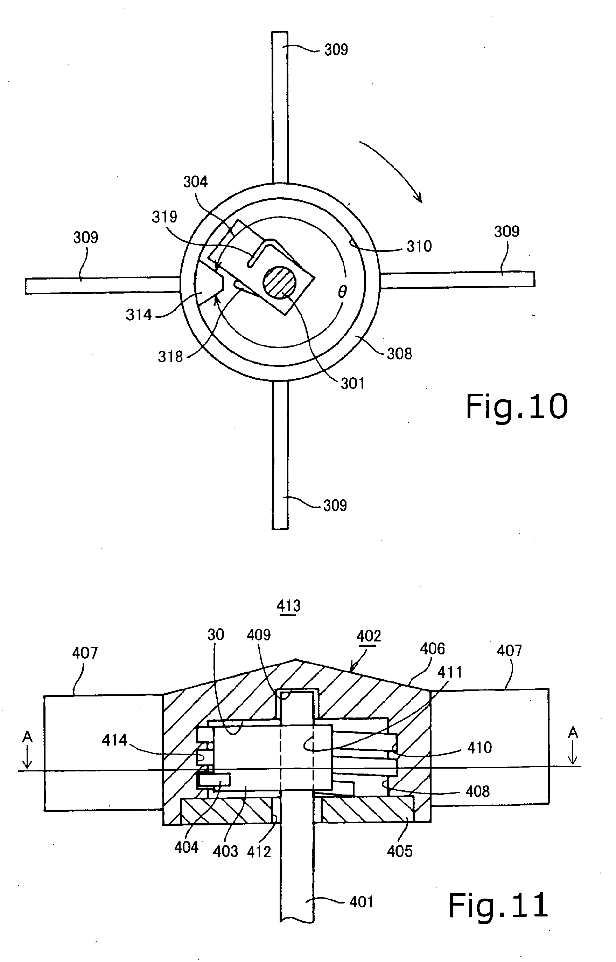

As shown in fig.9 and fig. 10, there is prepared the holding hole 312 at the central part of the upper side 311 of the housing space 310 of the boss 308 to hold the top of the rotary axis 301 in the direction of the axis. This holding hole 312 is the one to hold the rotary axis 301 and its diameter is bigger than the rotary axis 301 so the rotary axis 301 can rotate freely in the holding hole 312. There is opened the guiding hole 313 to set the one end of the spring 305 at the external circumference of the holding hole 312. The projection 314 is extruding the housing space 310 at its internal circumference. The plane shape of this projection shapes like Japanese fan as shown in fig.9.

The stopper 304 is square-bar shape, the penetrating hole 315 is prepared so that it crosses this square-bar stopper 304, and the rotary axis 301 is penetrates this penetrating hole 315. Meanwhile the position of the penetrating hole 315 is nearby the square-bar stopper 304.

The saucer-shaped bracket 306 takes a role of the lid which covers the bottom with the opening of the boss 308 in the center of which the penetrating hole 316 to penetrate the rotary axis 301 is opening. Meanwhile, the diameter of the penetrating hole 316 is bigger than the diameter of the rotary axis 301 so the rotary axis 301 freely rotates in the bracket 306.

The spring 305 has the coil part 317, and the one end 318 and the other end 319, both of which are extruding the coil part 317. The end 318 of coil part 317 is guided by the guiding hole 313 of the boss 308. The other end 319 of the spring 305 is fixed on the stopper 304 as shown in fig.9. Then the original force of the spring 305 is set weaker than the initiation torque of the motor.

We explain herewith the rotating situation of rotating member 303 and the rotating axis 301 fixed like aforementioned, according to the fig.9 and fig.10.

In the fig. 10, the synchronous motor 301 rotates clockwise, and the angle θ which is the angle without the projection 314 is called free angle. Impeller 302 should not be rotated simultaneously then because initiation torque is weak at initiation of the synchronous motor. Therefore the stopper 304 contacts the projection 314 when it goes to counter-clockwise direction at initiation, and since the original force is set weaker than the initiation torque, the rotary axis 301 rotates clockwise together with the stopper 304 on the contrary to the original force of the spring 305. In this case, the boss 308 does not rotate with the rotary axis 301 because the rotary axis 301 rotates freely to the holding hole 312. In the meantime, the other end 319 of the spring 305 is fixed so that the original force of the spring 305 is held down when the stopper 304 rotates clockwise.

Impeller 302 starts to rotate by contacting the stopper 304 to the lower side of the projection 314 when the synchronous motor continues rotation then rotates the rotary axis 301 and the stopper 304 rotates for the free angle θ. In this case, since the rotary axis 301 has rotated for the free angle θ, the torque is strengthened to rotate the impeller 302 whereby the impeller 302 rotates clockwise. Meanwhile the spring 305 is set weakly so that the synchronous motor does not speed down.

When the power is off to the synchronous motor, the rotary axis 301 stops, rotation of the spring 305 stops, the stopper 304 rotates counter-clockwise by the original force of the spring 305, and it contacts the upper side of the projection 314 and then comes back to the initial state.

As aforementioned, since the stopper 304 rotates for the free angle θ at initiation of synchronous motor then rotates the impeller 302; it is possible to initiate the synchronous motor easily.

4. Forth embodiment

We herewith explain the structure of the rotating member of the second embodiment with fig.11 to fig. 13. This embodiment consists of the rotary axis 401 of the compact synchronous motor, the impeller 402, the stopper 403, the dislocating member 404 and the bracket 405.

Regarding the impeller 402, four fans 407 are extruding the tubular boss 406 with the opening at the bottom side. There is prepared the housing space 408 to house the stopper 403 and the dislocating member 404 inside the boss 406.

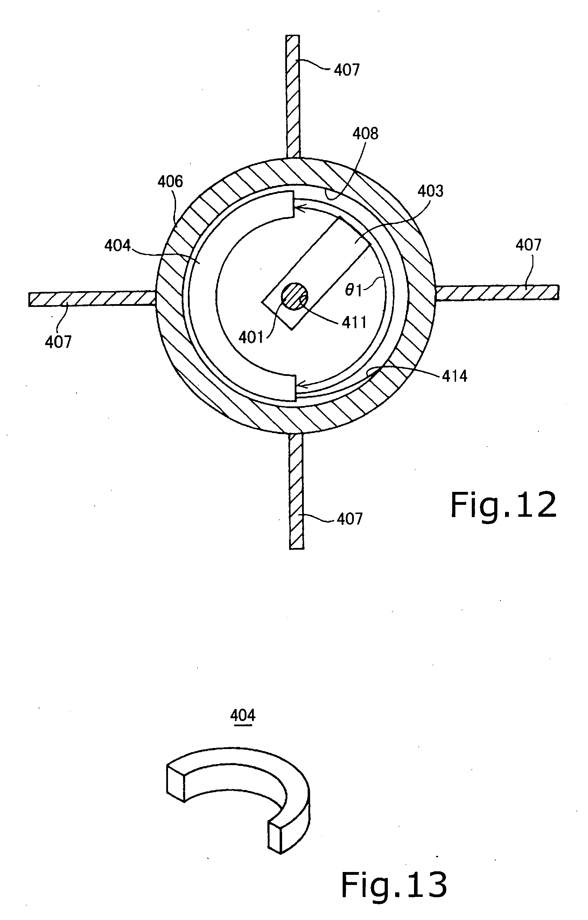

There is provided the holding hole 409 to hold the top of the rotary axis 401 at the center of the housing space 408 of the boss 406. This holding hole 409 is the one to hold the rotary axis 401 but the rotary axis 401 can freely rotate to the holding hole 409 in the internal circumference. The dislocating member of which plane surface is arc-shape is built-in the groove of the female screw 410 of the internal circumference of the housing space 408. (Ref. fig.12)

The stopper 403 is square-bar shape and the penetrating hole 411 is prepared so as to cross the square-bar shape stopper 403 and the rotary axis 401 is penetrated the penetrating hole 411. Meanwhile the penetrating hole 411 is prepared nearby the end of the square-bar shape stopper.

The bracket 405 takes a role of the lid to cover the bottom part of the boss 406 with the opening. The bracket is saucer-shape, in the center of which the penetrating hole 412 to pierce the rotary axis 401 is opened. This internal circumference of the penetrating hole 412 is bigger than the diameter of the rotary axis 401.

Regarding the function of the rotary member 413 with the aforementioned structure, we explain herewith according to fig.11 and fig.12. The rotary axis 401 rotates the synchronous motor in fig.12. In this case, the stopper 403 can freely rotate until contacting the dislocating member 404. This rotary angle is free angle that is θ1 (approx. 180°) of the fig.12.

When the stopper 403 rotates with the rotary axis 401 for the free angle θ1, the stopper 403 contacts the dislocating member 404 to rotate the dislocating member 404 with the stopper 403 together with the rotary axis 401. In this case, the dislocating member 404 moves in the direction of axis along with the male part 414 by rotation. This moving distance is the sliding angle. This sliding angle can be increased for the number of the groove of the female screw 414. If the number of groove of the internal circumference of the boss 406 is more than one, it is possible to keep the sliding angle for 360° or more. Then the dislocating member 404 comes to the end of female screw 414, so the dislocating member 404 pushes to rotate the rotary axis 401 and the boss 406.

As aforementioned, there is free angle until the stopper 403 contacts the dislocating member 404, and there is sliding angle while the dislocating member 404 is moving in the female screw 414, whereby it is possible to rotate the synchronous motor with low starting torque easily.

If the rotary axis 401 counter-rotates, since the dislocating member 404 goes from the top to the bottom of the female part 414, similar effect is expected.

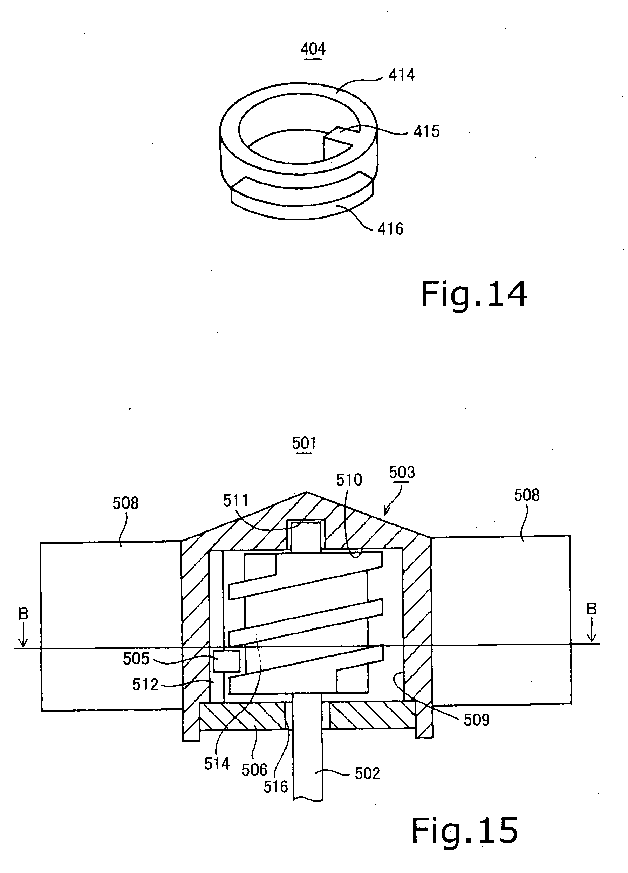

Although we used the dislocating member 404 of which plane shape is arc-shaped, we can use the ring-shape dislocating member 404 instead as shown in fig. 14. That means the projection 415 is extruding the internal circumference of the ring part 414 of the dislocating member 404. Meshing part 416 is meshed with the female part 414. The stopper 403 contacts to the projection 415. In the case of the ring-shaped dislocating member 404, the dislocating member 404 is hard to be taken out of the inside of the boss 406 and easy to assemble.

5. Fifth embodiment

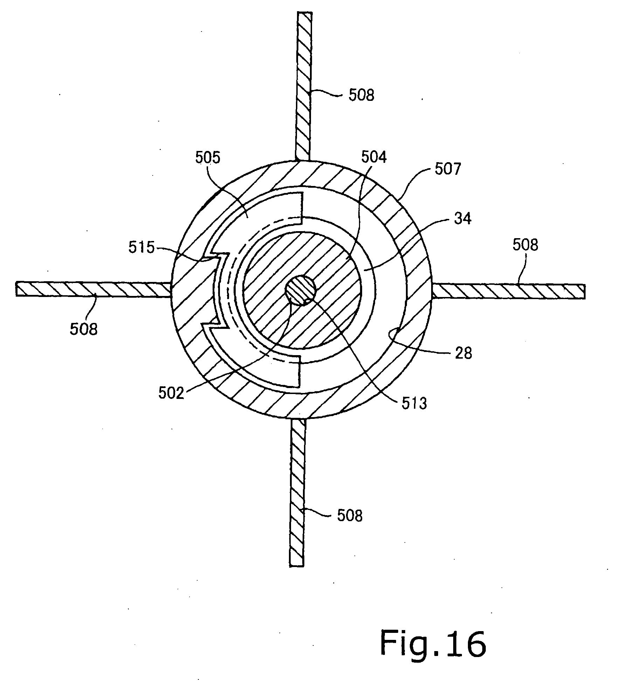

We herewith explain the structure of the rotating member of the second embodiment with fig.15 and fig.16. This rotary member 501 consists of the rotary axis 502, the impeller 503, the stopper 504, the dislocating member 505 and the bracket 506.

Regarding the impeller 503, four fans 508 are extruding the tubular boss 507 with the opening at the bottom part located at its center. In the meantime, there are prepared the housing space 509 to house the dislocating member 505 and the stopper 504 inside the boss 507. In the central part of the upper side 510 of the housing space 509 of the boss 507, the holding hole 511 to hold the top of the rotary axis is provided in the direction of axis. The diameter of the holding hole 511 is bigger than the one of the rotary axis 502 that can rotate freely. The projection 512 is extruding in the direction of the axis on the internal circumference of the housing space 509.

The stopper 504 is cylinder-shape, and the penetrating hole 513 is provided at the center of the stopper 504, the rotary axis 502 is prepared in the penetrating hole 513, and the rotary axis 502 is penetrated to the penetrating hole 511 to be held. Meanwhile, the male screw 514 is provided around the external circumference of the cylinder-shaped stopper 504.

The dislocating member 505 is arc-shaped, the concave part 515 to engage with the projection is prepared on its external circumference, and the internal circumference meshes the male screw part 514 of the stopper 504.

The bracket 506 takes a role of the lid to cover the bottom part with the opening of the boss 507 that is saucer-shaped, in the center of which the penetrating hole 516 to penetrate the rotary axis 502 is opened. Meanwhile, the diameter of the penetrating hole 516 is bigger than the diameter of the rotary axis 502.

We explain the function of the rotary member of the aforementioned structure.

When the synchronous motor initiated and the rotary axis 502 rotates, the stopper 504 rotates, and the dislocating member 505 which is meshed the male screw part 514 goes to the direction of axis by rotation of the male screw part 514. In this case, since the peripheral motion is stopped by the projection 512, the dislocating member 505 moves only to the direction of axis. The dislocation member 505 is stopped the motion to the direction of axis at the one end and the other end then the boss 507 starts to rotate.

As explained above, the boss 507 does not rotate at initiation of the synchronous motor, but the stopper 504 only rotates, whereby the dislocating member 505 moves then the motion of the dislocating member 505 at the male screw part 514 is the free angle and the sliding angle. Meanwhile summed-up angle of these free angle and sliding angle corresponds to the moving distance, and if the number of the groove going around the stopper 504 is more than one, the sum of the free angle and the sliding angle is more than 360°. Therefore it is easy to start rotation under the low torque at initiation of the synchronous motor.

6. Sixth embodiment

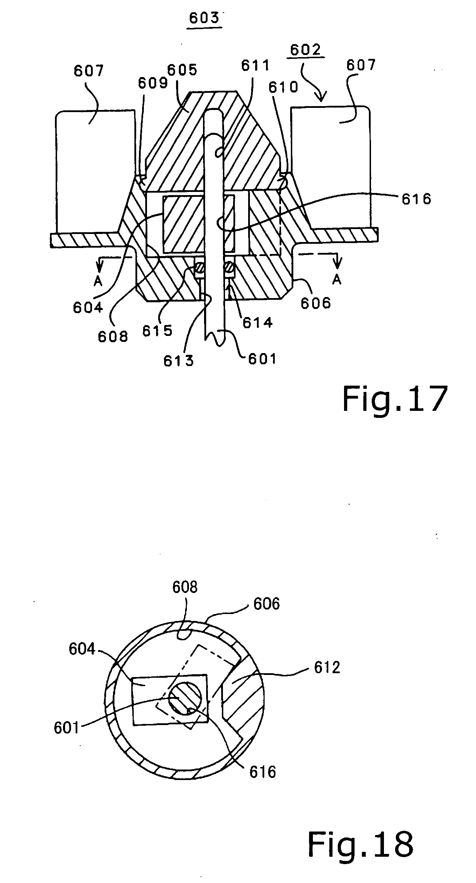

We herewith explain the structure of the rotating member of the second embodiment with fig.17 and fig.18. This embodiment is the structure that the impeller 602 of the compact draining pump is fixed on the rotary axis 601 of the compact synchronous motor. The rotary member 603 consists of the rotary axis 601, the impeller 602, the stopper 604 and the bracket 605. Four fans 607 are extruding the tubular boss 606 with the opening around the center of the upper side. There is prepared the housing space 608 to house the stopper 604 in the boss 606.

As shown in fig.17, the structure is that the triangle cone-like bracket 605 is capped on the boss 606 with the housing space 608. The bracket 605 is provided the projection 609 around its outskirt, and the triangle cone-like bracket 605 is capped on the housing space 608 of the boss 606 with the projection 609. The projection 609 is provided around outskirt of the bracket 605, then this projection 609 crutches the groove 610 prepared on the upper circumference of the housing space 608 of the boss 606 so the bracket 605 is fixed with the boss 606. In the meantime, the holding hole 611 to hold the top of the rotary axis 601 freely is opened at the center of the bottom side of the bracket in the direction of the rotary axis 601.

Trapezoid-shaped projection 612 is extruding the internal circumference of the housing space 608 of the boss 606, then the square-bar stopper 604 being crutched with the rotary axis 601 at the fixing hole 616 contacts the side of the projection 612. Furthermore, there is prepared the penetrating hole 613 in the direction of the rotary axis 601 to penetrate the rotary axis 601 rotary and freely. In addition, the step 614 is provided around the external circumference of the penetrating hole 613, then the ring-like packing 615 is arranged there.

We herewith explain the function of the rotary member 603 aforementioned.

When the rotary axis 601 rotates after initiating the synchronous motor, the stopper 604 also rotates. In this case, as shown in fig.18, the stopper 604 rotates freely without any load until it contacts the projection 612 coming out of the internal circumference of the boss 606 that means it has free angle. And when the stopper 604 contacts the projection 612, the boss 606 and the bracket 605 rotates to turn the impeller 602.

As aforementioned, the boss 606 does not rotate at initiation of synchronous motor but the stopper only rotates so the synchronous motor can easily start up.

During the impeller's rotation, if the foreign matter hit and loaded on the fans 607 of the impeller 602, impeller 602 does not take out of the rotary axis 601 because the boss 606 is fixed with the bracket 605 and the stopper 604.

If the bracket 605 is taken out on account of the hitting degree of the foreign matter, the boss 606 does not take out of the rotary axis 601 because the boss 606 is structured so as not to take out with the stopper 604.

**Claims**

1. The structure of the rotating member prepared rotary members such as windmill, propeller, fan, impeller etc. on its rotary axis, having tubular boss fixed center of the foresaid rotating member, having bracket that is the lid of the foresaid boss, having stopper fixed around the internal circumference of the foresaid boss, having the elastic member, and the foresaid stopper being almost bar-shape, and the foresaid rotating axis being penetrated so as to cross this bar-shape stopper, and there being opened the holding hole around the center of the foresaid boss to hold the top of the foresaid rotating axis, meanwhile the first spiral groove to build-in the foresaid elastic member being prepared around the external circumference of the holding hole, and there being opened the penetrating hole at the center of the bracket to penetrate the foresaid rotary axis and the second spiral groove to build-in the foresaid elastic member being prepared around the external circumference of the penetrating hole, and the stopper being prepared nearby the foresaid elastic member.

2. The invention according to claim 1 is the structure of the rotating member prepared rotary members such as windmill, propeller, fan, impeller etc. on its rotary axis, having tubular member with the bottom part at the center of the foresaid rotating member, having holding hole so as to insert the rotary axis at the center of the foresaid bottom part, preparing the projection on the internal circumference of the tubular member, winding the metal wire spirally, fixing the foresaid rotary axis by inserting the rotary axis through the center of the coiling part of the coil spring of which both ends extend externally from the said coiling part, inserting the top of the rotary axis with coil spring into the holding hole, and one end of the both ends projecting from the coil spring so as to contact the side wall of the foresaid projection.

3. The structure of the rotating member prepared rotary members such as windmill, propeller, fan, impeller etc. on its rotary axis, having the tubular boss at the center of the rotating member, having the bracket that is lid of the foresaid boss, having the stopper that is arranged around internal circumference of the foresaid boss, having coil spring at least, and the foresaid stopper being almost bar-shape, and the holding hole that rotates so as to hold the top of the foresaid rotary axis freely and rotary being opened at the center of the foresaid boss, and the projection to which the foresaid stopper contacts being prepared around the internal circumference of the foresaid boss, and the foresaid rotary axis being penetrated into the coil part of the foresaid spring, meanwhile the one end of the foresaid coil spring being built-in the external circumference of the holding hole, and the coil spring being fixed so that its original force is loaded on to the stopper, and the original force of the foresaid coil spring being set weakly less than starting torque of the foresaid motor.

4. The structure of the rotating member prepared rotary members such as windmill, propeller, fan, impeller etc. on its rotary axis, having the tubular boss located on the foresaid rotary member, having the bracket that is lid of the foresaid boss, having the stopper arranged at internal circumference of the foresaid boss, having the dislocating member, and the foresaid stopper being almost bar-shape, and stopper being penetrated to be set so as to cross the foresaid rotary axis, and there being opened the holding hole to hold the rotary axis so that the top of the foresaid rotary axis rotates freely and rotary, meanwhile the female screw part being prepared at the internal circumference of the foresaid boss, and the foresaid dislocating member being meshed with the foresaid female screw, and the foresaid dislocating member dislocating along with the foresaid female screw by rotating the foresaid stopper to contact the foresaid dislocating member, and the foresaid stopper rotating with the foresaid boss when the foresaid dislocating member moves to the one end or the other end of the foresaid female screw part.

5. The structure of the rotating member prepared rotary members such as windmill, propeller, fan, impeller etc. on its rotary axis, having the tubular boss at the center of the foresaid rotary member, having the bracket that is lid of the foresaid boss, having the stopper arranged around the internal circumference of the foresaid boss, having the dislocating member at least, and the foresaid stopper being cylinder-shape, and the foresaid rotary axis being penetrated to be fixed at center of the stopper, and there being prepared the male screw around the external circumference, and the holding hole being opened so that the top of the foresaid rotary axis rotates freely at the center of the foresaid boss, meanwhile projection extruding in the direction of the rotary axis on the internal circumference of the foresaid boss, and there being opened the penetrating hole to fix the foresaid rotary axis at the center of the foresaid bracket, and the foresaid dislocating member meshing the male screw of the stopper, and the foresaid dislocating member moving in the direction of the projection synchronizing with the rotation of the foresaid stopper, and the foresaid stopper rotating with the foresaid boss when the foresaid dislocating member reaching from the one end to the other end of the foresaid male screw.

6. The structure of the rotating member stated in claim 1 to claim 5 **characterized** that the foresaid motor is the synchronous motor.

7. The shock loaded when the foresaid elastic member contacts the stopper is mitigated so we do not have to be afraid of the damage on the elastic member such as crack; meanwhile, the stopper still crutches the rotary axis steadily.

8. The structure of the rotating member stated in claim 4 to claim 5 **characterized** that plane shape of the dislocating member is arc-shape.

9. The structure of the rotating member stated in claim 1 **characterized** that the plane shape of the dislocating member is ring-shape and the projection to which the foresaid stopper contacts extrudes the internal surface.

10. The structure of the rotating member stated in claim 4 **characterized** that the number of the groove made around the internal circumference of the boss is more than one around the foresaid female screw.

11. The structure of the rotating member stated in claim 5 **characterized** that the number of the groove made around the external circumference of the stopper is more than one around the foresaid male screw.

12. The structure of the rotating member prepared rotary members such as windmill, propeller, fan, impeller etc. on its rotary axis, having tubular boss with plurality of fans extruding externally which is located at the center of the foresaid rotary member, having the bracket that is lid of the foresaid rotary member, having the bar-shape stopper located inside the internal circumference of the foresaid boss at least, and there being prepared the penetrating hole penetrating at the center of the foresaid boss so that the foresaid rotary axis rotates freely, and the rotary axis penetrating the foresaid penetrating hole being fixed so that it crosses to penetrate the foresaid stopper, and the projection so as to contact the foresaid stopper extruding the internal circumference of the boss, and there being opened the holding hole at the center of the foresaid bracket so that the top of the foresaid rotary axis is held rotary and freely, and the foresaid bracket being fixed on the tubular boss in the situation of that the top of the foresaid rotary axis is held in the foresaid holding hole, and the position to cap on the foresaid bracket being counter side of the foresaid motor.

13. The structure of the rotating member stated in claim 1 to claim 12 **characterized** that they are driving force of the draining pump, laundry machine, dish washer and blower and so forth.

3

12    11    2

9         9

20        20
          8
          10

13

14

1

15

4

5

17

19        8

18

Fig.
1

Fig.2

Fig.3

Fig.4

Fig.5

Fig.6

Fig.7

14

Fig.8

Fig.9

Fig.10

Fig.11

Fig.12

Fig.13

404

414

415

416

Fig.14

501

508

511

510

503

508

B

B

505

512

509

514  506
516

502

Fig.15

Fig.16

603

602

607  609  605  611  610  607

616

A        A

604
608  615    614
613    601

# Fig.17

608    606

604    612

601    616

# Fig.18